# EUROPÄISCHE PATENTSCHRIFT

(11) **EP 0 885 686 B1**
(45) Veröffentlichungstag und Bekanntmachung des Hinweises auf die Patenterteilung: **27.02.2002**
(21) Anmeldenummer: 98109668.8
(22) Anmeldetag: 27.05.1998
(51) Int. Cl.: B23Q 1/48

(54) **Bearbeitungszelle**
Machining centre
Centre d'usinage

(30) Priorität: 20.06.1997 DE 19726309
(43) Veröffentlichungstag der Anmeldung: 23.12.1998
(73) Patentinhaber: EMAG-MASCHINEN VERTRIEBS- und SERVICE GmbH, D-73084 Salach (DE)
(72) Erfinder: He brüggen, Norbert, Dipl.-Ing., 73107 Eschenbach (DE)
(74) Vertreter: Zmyj, Erwin, Dipl.-Ing., Dipl.-Wirtsch.-Ing.

(56) Entgegenhaltungen:
- EP-A- 0 568 798
- SU-A- 1 549 723

## Beschreibung

Die Erfindung bezieht sich auf eine Bearbeitungszelle mit einem Maschinenkörper oder Maschinengestell und mit mindestens zwei an einem drehbaren Spindelträger angeordneten Spindeln mit jeweiliger Spanneinrichtung für die Aufnahme von Werkstücken und mit mindestens einem verfahrbaren und/oder verdrehbaren Trägersystem für Werkzeuge.

Es sind bereits mehrspindlige Drehmaschinen bekannt, bei denen die Spindeln nach Art eines Trommelrevolvers mit horizontaler Achse angeordnet sind. Solche mehrspindligen Drehmaschinen eignen sich zur Serienfertigung rotationssymmetrischer Teile, wobei das zu bearbeitende Stangenmaterial durch die Hohlspindel hindurchgeschoben und am vorderen Ende der jeweiligen Spindel bearbeitet und nach der Bearbeitung von der Stange abgestochen wird. Für die Bearbeitung von einzelnen Werkstücken benötigen solche Drehmaschinen eine gesonderte Ladevorrichtung in Form eines Roboters.

Bekannt sind auch nach dem sogenannten pick-up-Verfahren arbeitende Drehmaschinen, bei denen die Spindel in Achsrichtung verfahrbar ist und aufgrund ihrer Anordnung an einem Kreuzschlitten in der Lage ist, Werkstücke von einer Beladestation abzuholen und einer Bearbeitungsstation zuzuführen. Nachteilig bei solchen Drehmaschinen ist die Tatsache, daß insbesondere bei kurzen Bearbeitungszeiten die Nebenzeiten für das Be- und Entladen sehr stark ins Gewicht fallen.

Aufgabe der Erfindung ist es, eine Bearbeitungszelle der eingangs erwähnten Art so auszugestalten, daß eine bessere Auslastung der Bearbeitungszelle möglich ist.

Diese Aufgabe wird ausgehend von einer Bearbeitungszelle der eingangs erläuterten Art erfindungsgemäß dadurch gelöst, daß der Spindelträger um eine Achse drehbar ist, die einen Winkel von 0° bis 45° gegenüber der Vertikalen einnimmt, daß die Achsen der Spindeln unter einem Winkel zur Drehachse des Spindelträgers angeordnet sind, der zwischen 0° und 45° liegt, und daß die Spindeln als in ihrer Achsrichtung verfahrbare pick-up-Spindeln ausgebildet sind. Daher ist es möglich, daß die Spindeln mit ihren Spannfuttern, für den Fall, daß beide Winkel 45° sind, zwischen einer vertikalen, nach unten hängenden Position und einer waagrechten Position bewegbar sind. Durch die Anordnung von sogenannten pick-up-Spindeln an einem drehbaren Spindelträger kann mindestens eine Spindel einer Bearbeitungsstation zugeordnet sein, während mindestens eine weitere Spindel sich in einer Be- bzw. Entladestation zur Aufnahme eines Rohteiles oder zur Abgabe eines bearbeiteten Werkstückes befindet. Hierdurch fallen insbesondere bei kurzen Bearbeitungszeiten die Nebenzeiten für das Be- und Entladen praktisch nicht mehr ins Gewicht, weil immer mindestens eine Spindel sich in der Bearbeitungsstellung befindet. Aufgrund dieser erfindungsgemäßen Ausgestaltung ist immer mindestens eine Spindel in der Bearbeitungsposition, während eine dieser Arbeitsspindel zugeordnete komplimentäre Spindel Vorgänge ausführt, die zu den Nebenzeiten zu rechnen sind. Bezogen auf die Bearbeitungszelle kann also hierdurch niemals der Zustand eintreten, daß die Bearbeitung von Werkstücken aufgrund der notwendigen Be- und Entladung der Spindeln unterbrochen ist. Bei einer Bearbeitungszelle dieser Art können zwei oder mehrere Spindeln vorgesehen sein, die mit den unterschiedlichsten Werkzeugträgersystemen kombiniert werden können, so daß eine gleichzeitige Bearbeitung bei mehreren Spindeln vorgenommen werden kann.

Nach einer vorteilhaften Weiterbildung der Erfindung können die Spindeln unabhängig voneinander in Achsrichtung verfahrbar sein. Hierdurch kann die Bearbeitung sowie das Be- und Entladen unbeeinflußt voneinander durchgeführt werden.

Eine besonders vorteilhafte weitere Ausgestaltung der Erfindung besteht darin, daß jede Spindel mit achsparalleler Motoranordnung als Motorspindel-Einheit ausgebildet ist. Bei solchen Spindeln ist der Motor koaxial zur Spindel auf dieser in konzentrischer Form angeordnet, woraus sich die völlige Unabhängigkeit der einzelnen Spindeln und die sonstigen bekannten Vorteile dieser Motorspindeln ergeben.

Eine besonders enge Bauart läßt sich dadurch erzielen, daß jede Motorspindel-Einheit an ihren Außenflächen durch unmittelbar an diesen Außenflächen anliegende Halterungen gehalten ist, die eine Verschiebung der Spindeleinheit in ihrer Achsrichtung zulassen. Da die Motorspindel-Einheiten direkt an ihrem Außenmantel gehalten und geführt sind, entfällt der üblicherweise vorgesehene Schlitten, so daß die Spindeln sehr eng benachbart am Spindelträger angeordnet werden können.

Wenn der Spindelträger in weiterer Ausgestaltung der Erfindung in Richtung seiner Drehachse verfahrbar ausgebildet ist, so hat dies mehrere Vorteile. Aufgrund dieser Ausgestaltung können Wegstrecken zurückgelegt werden, die den Verfahrweg der einzelnen Spindel übersteigen, weil die Verschiebung des Spindelträgers zu dem Verfahrweg der Spindel hinzukommt. Außerdem können die Verfahrzeiten für die Spindel wesentlich verkürzt werden, wenn die bereits in einer Richtung verfahrene Spindel zusätzlich noch durch das Verfahren des Spindelträgers in der gleichen Richtung bewegt wird.

Wenn die Spindeln in weiterer vorteilhafter Ausgestaltung der Erfindung oberhalb einer Ebene angeordnet sind, in der sich eine Be- und Entladestation für die Werkstücke befindet, so sind die Vorgänge des Entladens und anschließenden Beladens einer Spindel begünstigt, da beispielsweise das Entladen während des Verschwenkens der Spindel in die Beladestation durch einfaches Abwerfen des Werkstückes auf diesem Schwenkweg erfolgen kann. Hierdurch können diese Nebenzeiten verkürzt werden.

Eine weitere vorteilhafte Ausgestaltung ergibt sich dadurch, daß die Spindeln oberhalb einer Ebene angeordnet sind, in der sich eine Bearbeitungsstation befindet. Hierdurch wird beispielsweise ein problemloses Abführen der anfallenden Späne und des eingesetzten Kühlmittels ermöglicht.

Für die Ausgestaltung des Spindelträgers sind nach der vorliegenden Erfindung zwei grundsätzliche Möglichkeiten vorgesehen. Die eine Möglichkeit besteht darin, daß der Spindelträger als Säule oder Turm ausgebildet ist und die Spindeln am Außenumfang des Spindelträgers gehalten sind. Die zweite Möglichkeit ist darin zu sehen, daß der Spindelträger als Hohlkörper ausgebildet ist und die Spindeln in dem Hohlkörper gehalten sind, wobei die Spindeln mit den das Werkstück aufnehmenden Enden über den Hohlkörper hinausragen.

Die Erfindung wird nachfolgend anhand von Ausführungsbeispielen näher erläutert. In der Zeichnung zeigen:
- **Figur 1:**: Eine Seitenansicht einer Bearbeitungszelle mit mehreren in einem als Hohlkörper ausgebildeten Spindelträger angeordneten Spindeln;
- **Figur 2:**: Eine Stirnansicht der Bearbeitungszelle nach Figur 1;
- **Figur 3:**: Eine Draufsicht auf die Bearbeitungszelle nach Figur 1;
- **Figur 4:**: Eine der Figur 1 entsprechende Seitenansicht einer abgeänderten Ausführungsform und
- **Figur 5:**: Eine weitere Ausführungsvariante einer Bearbeitungszelle in einer der Figur 1 entsprechenden Ansicht.

In sämtlichen Darstellungen werden diejenigen Teile der Bearbeitungszelle, die für das Verständnis der Erfindung nicht unbedingt erforderlich sind, nur schematisch dargestellt.

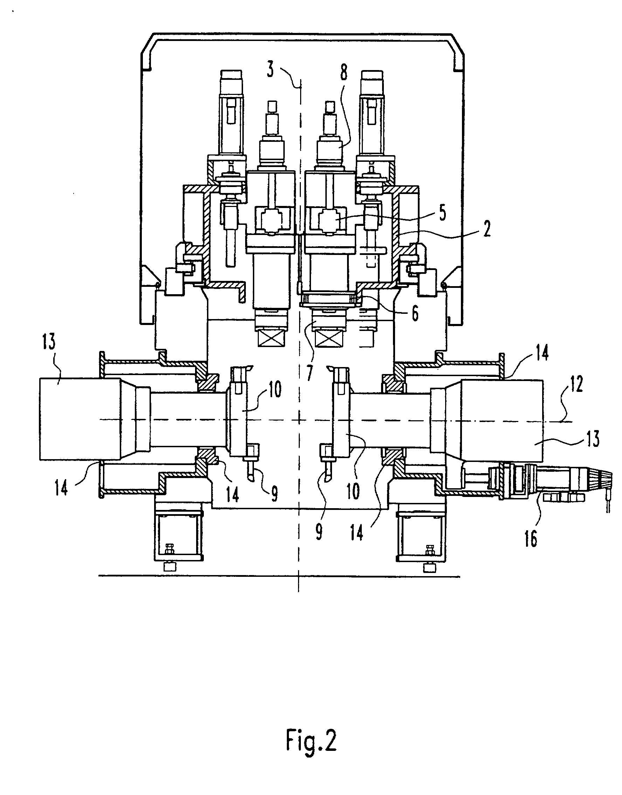

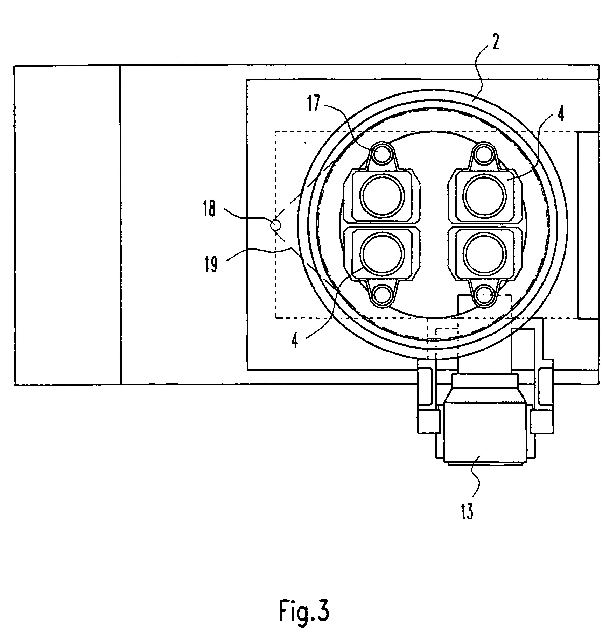

Wie aus der Zeichnung insgesamt ersichtlich, ist an einem Maschinenkörper oder Maschinengestell 1 ein Spindelträger 2 um eine vertikale Achse 3 drehbar gelagert. Dieser Spindelträger ist als Hohlkörper ausgebildet und nimmt im dargestellten Ausführungsbeispiel vier Motorspindeln 4 auf, die mittels Halterungen 5 und 6 am Spindelträger 2 gehalten sind, der Art, daß die jeweiligen Spanneinrichtungen 7 nach unten über den Spindelträger 2 hinausragen. Die Halterungen 5 und 6 greifen dabei unmittelbar an den äußeren Mänteln 5', 6' der als Motorspindel ausgebildeten Spindeleinheit an, wodurch diese Spindeleinheiten ohne zusätzliche Anordnung eines Schlittens geführt sind. Mit 8 sind Betätigungseinrichtungen für die Spanneinrichtungen 7 bezeichnet. Die als Motorspindeln ausgebildeten Spindeln 4 sind in Richtung ihrer Längsachse gegenüber dem Spindelträger 2 verfahrbar, da die Halterungen als Führungseinrichtungen für das Verfahren der Spindeln in Achsrichtung ausgebildet sind, so daß sie in der Lage sind einerseits die notwendigen Zustellbewegungen gegenüber Werkzeugen 9 eines Werkzeugträgers 10 und andererseits Transportbewegungen für das Be- und Entladen in entsprechenden Be- oder Entladestationen 11 auszuführen. Sowohl der Werkzeugträger 10, der im dargestellten Ausführungsbeispiel als Scheibenrevolver ausgeführt ist, als auch die Be- und Entladestation 11, die als Förderband ausgeführt ist, befinden sich in Ebenen, die unterhalb der Spindeln 4 liegen. Im vorliegenden Ausführungsbeispiel sind, wie aus Figur 2 ersichtlich, zwei Werkzeugträger 10 vorgesehen, die jeweils um eine Achse 12 mittels eines Antriebs 13 drehbar und mittels einer Verschiebeeinrichtung 16 in Achsrichtung jeweils in Führungen 14 verfahrbar sind, um die Zustellbewegung bei der Bearbeitung eines Werkstückes 15 durchführen zu können. Wie aus Figur 3 ersichtlich, sind in dem als Hohlkörper ausgebildeten Spindelträger 2 insgesamt vier Spindeln 4 vorgesehen, so daß jeweils zwei Spindeln in Arbeitsstellung stehen, wobei jeder dieser beiden Spindeln ein Werkzeugträger 10 zugeordnet ist, während die anderen beiden Spindeln sich in der Be- bzw. Entladestation 11 befinden. Mit 17 sind Vorschubeinrichtungen für das Verschieben der Spindeln 4 in Achsrichtung bezeichnet. Mit 18 ist ein Drehantrieb für den Spindelträger 2 bezeichnet, der über einen Riemen oder eine Kette 19 den Spindelträger antreibt.

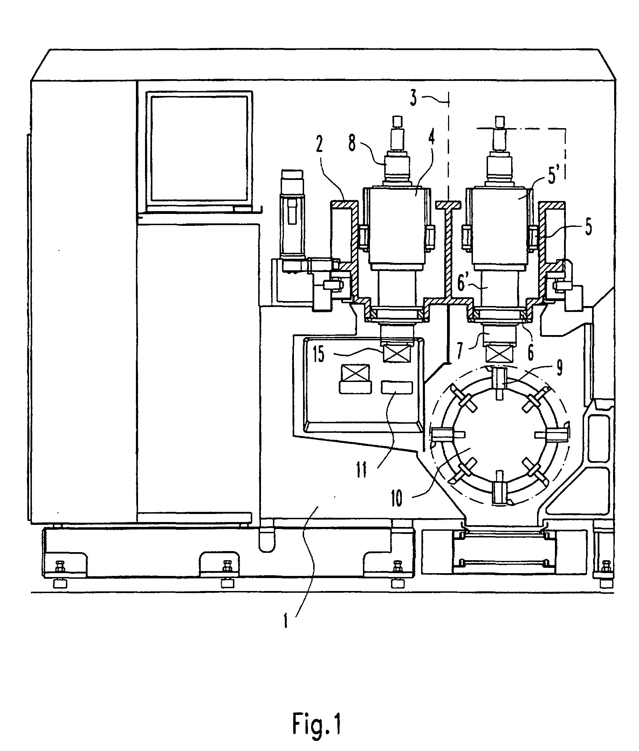

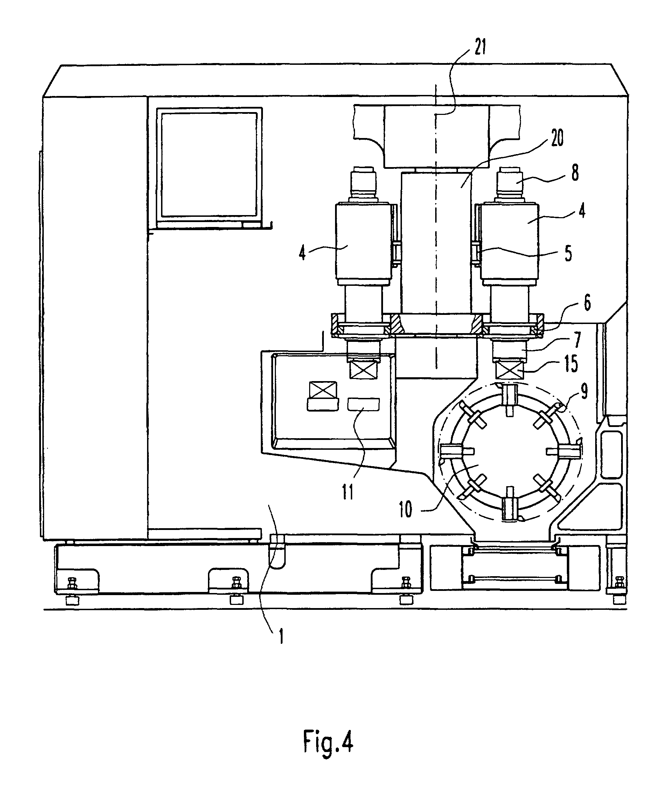

Die Ausführungsform nach Figur 4 unterscheidet sich von derjenigen nach den Figuren 1 bis 3 dadurch, daß ein Spindelträger 20 nach Art einer Säule ausgebildet ist, wobei die einzelnen Spindeln 4 am Außenumfang mittels Halterungen bzw. Führungen 5 und 6 gehalten und in Achsrichtung verschiebbar sind. Der Spindelträger 20 ist um eine lotreche Achse 21 drehbar. Der übrige Aufbau der Bearbeitungszelle entspricht derjenigen nach den Figuren 1 bis 3.

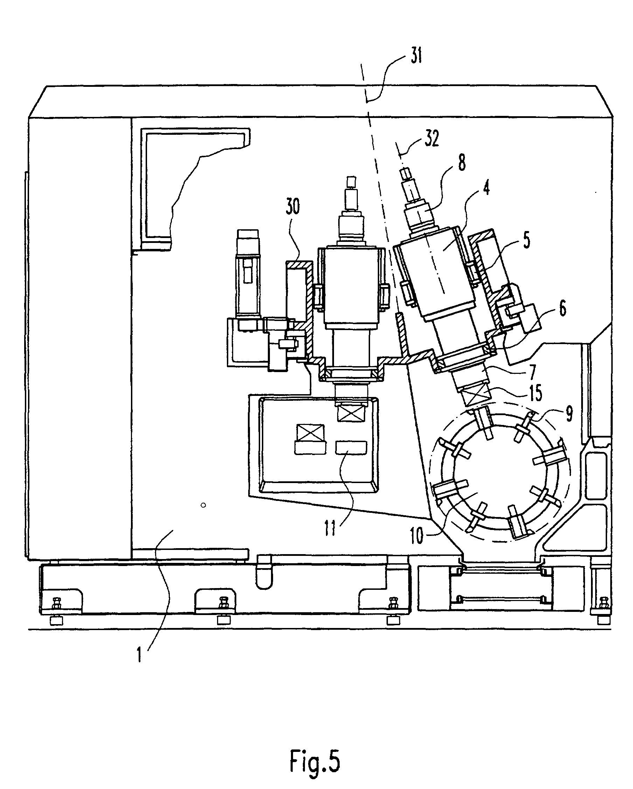

Bei der Ausführungsform nach Figur 5 ist ein Spindelträger 30 als kegelförmiger Hohlkörper ausgebildet, in dessen Inneren mittels Halterungen 5 und 6 die Spindeln 4 gehalten sind. Die Besonderheit dieser Auführungsform besteht darin, daß die Drehachse 31 des Spindelträgers 30 gegenüber der Vertikalen um einen Winkel geneigt ist. Weiterhin sind die Längsachsen 32 der Spindeln 4 gegenüber der Drehachse 31 des Spindelträgers geneigt. Hierdurch ergibt sich eine vertikale Position der Spindeln 4 in der Be- und Entladestation 11 und eine geneigte Position in der Arbeitsstellung, in welcher die Spanneinrichtung 7 mit Werkstück 15 einem Werkzeug 9 eines Werkzeugträgers 10 zugeordnet ist.

## Patentansprüche

1. Bearbeitungszelle mit einem Maschinenkörper oder Maschinengestell und mit mindestens zwei an einem drehbaren Spindelträger angeordneten Spindeln mit jeweiliger Spanneinrichtung für die Aufnahme von Werkstücken und mit mindestens einem verfahrbaren und/oder verdrehbaren Trägersystem für Werkzeuge, **dadurch gekennzeichnet, daß** der Spindelträger (2, 20, 30) um eine Achse (3, 21, 31) drehbar ist, die einen Winkel von 0° bis 45° gegenüber der Vertikalen einnimmt, daß die Achsen der Spindeln (4) unter einem Winkel zur Drehachse des Spindelträgers (2, 20, 30) angeordnet sind, der zwischen 0° und 45° liegt, und daß die Spindeln (4) als in ihrer Achsrichtung verfahrbare pick-up-Spindeln ausgebildet sind.

2. Bearbeitungszelle nach Anspruch 1, **dadurch gekennzeichnet, daß** die Spindeln (4) unabhängig voneinander in Achsrichtung verfahrbar sind.

3. Bearbeitungszelle nach Anspruch 1 oder 2, **dadurch gekennzeichnet, daß** jede Spindel (4) mit achsparalleler Motoranordnung als Motorspindel-Einheit ausgebildet ist.

4. Bearbeitungszelle nach Anspruch 3, **dadurch gekennzeichnet, daß** jede Motorspindel-Einheit (4) an ihren Außenflächen (5', 6') durch unmittelbar an diesen Außenflächen anliegende Halterungen (5, 6) gehalten ist, die eine Verschiebung der Spindeleinheit in ihrer Achsrichtung zulassen.

5. Bearbeitungszelle nach einem der Ansprüche 1 bis 4, **dadurch gekennzeichnet, daß** der Spindelträger (2, 20, 30) in Richtung seiner Drehachse verfahrbar ausgebildet ist.

6. Bearbeitungszelle nach einem der Ansprüche 1 bis 5, **dadurch gekennzeichnet, daß** die Spindeln (4) oberhalb einer Ebene angeordnet sind, in der sich eine Be- und Entladestation (11) für die Werkstücke (15) befindet.

7. Bearbeitungszelle nach einem der Ansprüche 1 bis 6, **dadurch gekennzeichnet, daß** die Spindeln (4) oberhalb einer Ebene angeordnet sind, in der sich eine Bearbeitungsstation (10) befindet.

8. Bearbeitungszelle nach einem der Ansprüche 1 bis 7, **dadurch gekennzeichnet, daß** der Spindelträger als Säule (20) oder Turm ausgebildet ist und die Spindeln am Außenumfang des Spindelträgers gehalten sind.

9. Bearbeitungszelle nach einem der Ansprüche 1 bis 7, **dadurch gekennzeichnet, daß** der Spindelträger als Hohlkörper (2, 30) ausgebildet ist und die Spindeln in dem Hohlkörper gehalten sind, wobei die Spindeln mit den das Werkstück aufnehmenden Enden über den Hohlkörper (2, 30) hinausragen.

## Claims

1. Machining cell having a machine body or machine framework and having at least two spindles, which are arranged on a rotatable spindle carrier and have a respective chucking fixture for receiving workpieces, and having at least one displaceable and/or rotatable carrier system for tools, **characterized in that** the spindle carrier (2, 20, 30) can be rotated about an axis (3, 21, 31) which assumes an angle of 0° to 45° with respect to the vertical, **in that** the axes of the spindles (4) are arranged at an angle of between 0° and 45° with respect to the axis of rotation of the spindle carrier (2, 20, 30), and **in that** the spindles (4) are designed as pick-up spindles which can be disp laced in their axial direction.

2. Machining cell according to Claim 1, **characterized in that** the spindles (4) can be displaced in the axial direction independently of one another.

3. Machining cell according to Claim 1 or 2, **characterized in that** each spindle (4) is designed with an axis -parallel motor arrangement as motor spindle unit.

4. Machining cell according to Claim 3, **characterized in that** each motor spindle unit (4) is retained on its outer surfaces (5', 6') by securing means (5, 6) which butt directly against said outer surfaces and permit displacement of the spindle unit in its axial direction.

5. Machining cell according to one of Claims 1 to 4, **characterized in that** the spindle carrier (2, 20, 30) is designed so as to be displaceable in the direction of its axis of rotation.

6. Machining cell according to one of Claims 1 to 5, **characterized in that** the spindles (4) are arranged above a plane in which a loading and unloading station (11) for the workpieces (15) is located.

7. Machining cell according to one of Claims 1 to 6, **characterized in that** the spindles (4) are arranged above a plane in which a machining station (10) is located.

8. Machining cell according to one of Claims 1 to 7, **characterized in that** the spindle carrier is designed as a column (20) or tower and the spindles are retained on the outer circumference of the spindle carrier.

9. Machining cell according to one of Claims 1 to 7, **characterized in that** the spindle carrier is designed as a hollow body (2, 30) and the spindles are retained in the hollow body, the spindles projecting beyond the hollow body (2, 30) by way of their workpiece-receiving ends.

## Revendications

1. Cellule d'usinage avec un corps de machine ou un bâti de machine et avec au moins deux broches disposées sur un porte -broche rotatif avec un dispositif de serrage respectif pour recevoir des pièces à usiner et avec au moins un système de support déplaçable et/ou rotatif pour des outils, **caractérisée en ce que** le porte-broche (2, 20, 30) peut tourner autour d'un axe (3, 21, 31), qui adopte un angle de 0° à 45° par rapport à la verticale, **en ce que** les axes des broches (4) sont disposés suivant un certain angle par rapport à l'axe de rotation du porte-broche (2, 20, 30), lequel est compris entre 0° et 45°, et **en ce que** les broches (4) sont réalisées en tant que broches "pick-up" déplaçables dans leur direction axiale.

2. Cellule d'usinage selon la revendication 1, **caractérisée en ce que** les broches (4) sont déplaçables indépendamment les unes des autres dans la direction axiale.

3. Cellule d'usinage selon la revendication 1 ou 2, **caractérisée en ce que** chaque broche (4 ) est réalisée avec un agencement de moteur à axe parallèle en tant qu'unité de broche à moteur.

4. Cellule d'usinage selon la revendication 3, **caractérisée en ce que** chaque unité de broche à moteur (4) est maintenue sur ses faces extérieures (5', 6') par des fixations (5, 6) s'appliquant directement sur ces faces extérieures, qui autorisent un décalage de l'unité de broche dans sa direction axiale.

5. Cellule d'usinage selon l'une quelconque des revendications 1 à 4, **caractérisée en ce que** le porte-broche (2, 20, 30) est réalisé de manière déplaçable dans la direction de son axe de rotation.

6. Cellule d'usinage selon l'une quelconque des revendications 1 à 5, **caractérisée en ce que** les broches (4) sont disposées au-dessus d'un plan qui se trouve dans un poste de chargement et de déchargement (11) pour les pièces à usiner (15).

7. Cellule d'usinage selon l'une quelconque des revendications 1 à 6, **caractérisée en ce que** les broches (4) sont disposées au-dessus d'un plan dans lequel se trouve un poste d'usinage (10).

8. Cellule d'usinage selon l'une quelconque des revendications 1 à 7, **caractérisée en ce que** le porte-broche est réalisé en tant que colonne (20) ou tour et les broches sont maintenues sur la périphérie extérieure du porte-broche.

9. Cellule d'usinage selon l'une quelconque des revendications 1 à 7, **caractérisée en ce que** le porte-broche est réalisé en tant que corps creux (2, 30) et les broches sont maintenues dans le corps creux, les broches dépassant avec les extrémités recevant la piecè à usiner au-delà du corps creux (2, 30).
